# EUROPEAN PATENT APPLICATION

(11) **EP 3 184 498 A1**
(43) Date of publication of application: **28.06.2017**
(21) Application number: 15834415.0
(22) Date of filing: 14.08.2015
(51) Int. Cl.: C03C 27/06, E06B 3/66

(54) **SPACING-MAINTAINING MEMBER**

(30) Priority: 21.08.2014 JP 2014168673
(71) Applicant: Nippon Sheet Glass Company, Limited, Tokyo 108-6321 (JP)
(72) Inventor: COLLINS, Richard Edward, NSW 2251 (AU); ASANO Osamu, Tokyo 108-6321 (JP)
(74) Representative: Prinz & Partner mbB
(86) International application number: PCT/JP2015/072964
(87) International publication number: WO 2016/027750

(57) **Abstract**

To provide a spacer member for a vacuum double glazing glass panel capable of stably maintaining a void of the glass panel and of suppressing a heat flow between the spacer member and glass sheets. The spacer member 3 being disposed at each of support points set at predetermined intervals on opposing faces of a pair of glass sheets opposing to each other when a gap formed between the pair of glass sheets is maintained under a depressurized state, wherein the spacer member 3 includes: at least one contacting member 7 having a first planar part 7A on one side and a second planar part on the other side coming into contact with the respective opposing faces of the glass sheets, and a projecting piece 8 extending integrally from the contacting member 7 for determining a posture of the contacting member 7 when the contacting member 7 is provided between the pair of glass sheets, and on the assumption that an imaginary column P that circumscribes the spacer member 3 with its height direction being vertical to the first planar part 7A is provided, the total area S1 of the first planar part 7A or the total area of the second planar part is equal to or smaller than one half of a circular cross section S of the column P.

## Description

### TECHNICAL FIELD

The present invention relates to a plurality of spacer members for a glass panel disposed between a pair of glass sheets when a vacuum double glazing glass panel is manufactured.

### BACKGROUND ART

In a vacuum double glazing glass panel (simply referred to as "glass panel" hereinafter) in which peripheries of a pair of glass sheets are sealed to establish a depressurized state, a compressive force is applied from the outside of the glass sheets by atmospheric pressure. Therefore, spacer members having high compressive strength are arranged at regular intervals between the pair of glass sheets. When an external force such as a shock or a wind is applied to the glass panel, the glass panel is bent to cause the pair of glass sheets to move relatively to each other in a plane direction. As a result, the spacer members may be displaced or damaged, and even the glass sheet may suffer damage if a load is concentrated on a local part of the glass sheet.

In view of the above, according to a technique disclosed in Patent Literature 1, each spacer member is formed of a core material having high compressive strength, and a shock absorbing layer made of a soft material such as soft metal and provided in one end of the core material. The soft material is easily deformable, which allows the spacer member to easily follow the glass sheets moving relatively to each other.

Since the spacer members are disposed between the pair of glass sheets, heat is transferred from one of the glass sheets to the other of the glass sheets through the spacer members when temperature difference occurs between the pair of glass sheets. Such heat transfer affects room temperature around one of the glass sheets, and thus preferably should be small. A heat flow between the glass sheets and the spacer members is proportional to a contacting area therebetween. Hence, in the case of the spacer member according to Patent Literature 1 having a large contacting area with the glass sheets, the heat flow between the glass sheets and the spacer members would be increased.

According to a technique disclosed in Patent Literature 2, each spacer member has curved convex faces in portions coming into contact with the glass sheets. The curved convex face has a small contacting area with the glass sheet, which reduces the heat flow between the glass sheets and the spacer members.

### CITATION LIST

### PATENT LITERATURE

[Patent Literature 1] Published Japanese Translation of PCT International Publication
   for Patent Application No. 10-507500
[Patent Literature 2] Japanese Unexamined Patent Application Publication No. 11-349358

### SUMMARY OF INVENTION

### TECHNICAL PROBLEM

On the other hand, according to the disclosure of Patent Literature 2, the curved convex face of the spacer member is brought into contact with the glass sheet by point contact, which increases pressure in the contacting point. As a result, the glass sheet or the spacer member is easily damaged due to compressive stress caused by atmospheric pressure. Also, the curved convex face of the spacer member in the contacting point causes the spacer member to roll over and easily be displaced when the spacer member is displaced between the glass sheets.

The present invention has been made having regard to the above disadvantages, and its object is to provide a spacer member for a glass panel capable of stably maintaining a void of the vacuum double glazing glass panel and of suppressing a heat flow between the spacer member and glass sheets.

### SOLUTION TO PROBLEM

A characteristic feature of a spacer member for a vacuum double glazing glass panel according to the present invention lies in a spacer member for a glazing, the spacer member being disposed at each of support points set at predetermined intervals on opposing faces of a pair of glass sheets opposing to each other when a gap formed between the pair of glass sheets is maintained under a depressurized state, wherein the spacer member includes: at least one contacting member having a first planar part on one side and a second planar part on the other side coming into contact with the respective opposing faces of the glass sheets and a projecting piece extending integrally from the contacting member, and on the assumption that an imaginary column that circumscribes the spacer member with its height direction being vertical to the first planar part is provided, the total area of the first planar part(s) or the total area of the second planar part(s) is equal to or smaller than one half of a circular cross section of the column.

The above arrangement in which the contacting member has the first planar part and the second planar part coming into contact with the pair of glass sheets, respectively, stabilizes the posture of the spacer member when disposed between the glass sheets. Further, since the planar parts of the contacting member are brought into contact with the glass sheets, the compressive stress produced by atmospheric pressure is dispersed, which allows the glass sheets and the spacer member to be hardly damaged.

Further, the projecting piece for determining the posture of the contacting member when the spacer member is disposed between the pair of glass sheets extends integrally from the contacting member. Thus, the size of the spacer member is determined based on an overall configuration in which the projecting piece protrudes from the contacting member. According to the present invention, on the assumption that the imaginary column that circumscribes the spacer member with its height direction being vertical to the first planar part is provided, the total area of the first planar part(s) or the total area of the second planar part(s) is equal to or smaller than one half of a circular cross section of the column. More particularly, the first planar part and the second planar part come into contact with the glass sheets to maintain the posture of the contacting member, and the projecting piece protruding from the contacting member is configured to properly determine the posture of the contacting member when the contacting member is disposed, and the area of the first planar part(s) or the second planar part(s) is smaller than the entire area of the spacer member. As a result, a heat flow transferring from one of the glass sheets to the other of the glass sheets through the spacer member is reduced, thereby to achieve the vacuum double glazing glass having good heat-insulating properties.

A further characteristic feature of the spacer member according to the present invention lies in that the total area of the first planar part(s) or the total area of the second planar part(s) is equal to or smaller than one quarter of the circular cross section of the column.

In the above arrangement in which the total area of the first planar part(s) or the total area of the second planar part(s) is equal to or smaller than one quarter of the circular cross section of the column, the heat flow transferred between the glass sheets and the spacer member is reduced to improve the heat-insulating properties of the vacuum double glazing glass.

Additionally, in the above arrangement in which the total area of the first planar part(s) or the total area of the second planar part(s) is further reduced, compared with the arrangement in which the total area of the first planar part(s) or the total area of the second planar part(s) is equal to or smaller than one half of the circular cross section of the column, the posture of the contacting member to come into contact with the surfaces of glass sheets is less restricted. Therefore, if the glass sheets are bent by wind pressure, for example, to cause the pair of glass sheets to move relatively to each other in a plane direction of the glass sheets, the contacting member is inclined and deformed or changes its posture to roll over, thereby to allow the relative displacement between the glass sheets more easily.

On the other hand, if the compressive strength of the material of the spacer member is lower than the compressive stress applied to the spacer member, the spacer member may be damaged. Therefore, the total area of the first planar part(s) or the total area of the second planar part(s) is determined so that the compressive stress applied to the spacer member is below the compressive strength of the spacer member.

A further characteristic feature of the spacer member according to the present invention lies in that the spacer member has one contacting member and a ring part which is supported by the projecting piece and surrounding the contacting member.

Since the ring part is supported by the projecting piece and surrounds the contacting member, the ring part comes into contact with the surfaces of the glass sheets to suitably determine the posture of the contacting member, even if the contacting member changes its posture to roll over when the spacer member is disposed between the surfaces of the glass sheets. As a result, the first planar part and the second planar part of the contacting member reliably come into contact with the opposing faces of the pair of glass sheets, thereby to improve an efficiency of disposing the spacer.

Further, the ring part is supported by the projecting piece extending integrally from the contacting member, in which the projecting piece is a small element projecting from a specific part of the contacting member. Thus, a weight ratio of the projecting piece to the whole spacer member is not so high. According to such an arrangement, while the spacer member supports the ring part, a large part of weight distribution of the spacer member remains around the contacting member located in the center, which effectively prevents the contacting member from changing its posture to roll over when the spacer member is disposed between the surfaces of the glass sheets.

A further characteristic feature of the spacer member according to the present invention lies in that the spacer member has a plurality of contacting members connected one another via the projecting piece.

Since the spacer member has a plurality of contacting members, a plurality of first planar parts and a plurality of second planar parts are provided to come into contact with the glass sheets. As a result, the posture of the spacer member is stabilized when disposed between the glass sheets and less easily changes its posture to fall over.

The number and the position of the contacting members connected through the projecting piece may be freely determined. Thus, they are suitably selected depending on the compressive strength or the like of the material forming the contacting member.

A further characteristic feature of the spacer member according to the present invention lies in that a combination of the projecting pieces forms a ring-like connection part in which said plurality of contacting members are accommodated.

Since the connection part extending integrally from the contacting members has a ring-like shape, it is prevented that the contacting members are disadvantageously entangled with each other when the spacer member is disposed between the surfaces of the glass sheets. As a result, an efficiency of disposing the spacer member is improved.

A further characteristic feature of the spacer member according to the present invention lies in that the ring-like connection part is in an annular shape.

Since the ring-like connection part is in an annular shape, the entire outer profile of the spacer member has a uniform curvature, which diminishes the chances that a connection part of a specific spacer member may come into a connection part of an adjacent spacer member when the plurality of spacers are disposed in the surfaces of the glass sheets. As a result, it is prevented more reliably that the contacting members are disadvantageously entangled with each other.

While the spacer member is small, it is possible to visually recognize the individual spacer members. However, it would be difficult to visually confirm the direction of each spacer member if the overall configuration of the spacer member is circular when the spacer members rotate in various directions. Therefore, only if the spacer members are disposed in proper positions, it is recognized that the spacer members are arranged in a regular manner, which is visually preferable.

A further characteristic feature of the spacer member according to the present invention lies in that at least one of the first planar part and the second planar part is of a circular shape.

Since at least one of the first planar part and the second planar part is of a circular shape, when the pair of glass sheets are displaced relatively to each other along the plane direction, the properties of the contacting member are not changed depending on the rolling direction when the contacting member changes its posture to roll on the glass sheets. As a result, the spacer member is easily inclined and deformed or easily assumes the rolling posture regardless of the direction of relative movement between the glass sheets. In this manner, the relative movement between the glass sheets is allowed in any direction regardless of in which direction the spacer members are arranged.

A further characteristic feature of the spacer member according to the present invention lies in that the projecting piece does not touch the glass sheets with the contacting member being provided between the pair of glass sheets.

Since the projecting piece does not touch the glass sheets, no heat flow is produced between the pair of glass sheets through the projecting piece, which can maintain the heat-insulating properties of the vacuum double glazing glass panel more reliably.

A further characteristic feature of the spacer member according to the present invention lies in that the maximum width dimension of the first planar part or the second planar part is equal to or smaller than a height dimension between the first planar part and the second planar part.

Since the maximum width dimension of the first planar part or the second planar part is equal to or smaller than a height dimension between the first planar part and the second planar part, when the glass panel is bent and deformed by such as a shock or a wind pressure to cause the pair of glass sheets to move relatively to each other in the plane direction, the contacting member is easily inclined between the pair of glass sheets. More particularly, an intermediate area of the contacting member is easily deformed in a substantially S-shape along the plane direction of the glass sheets, or easily changes its posture to roll over between the pair of glass sheets with the contacting state between the first planar part and the second planar part and the glass sheets being maintained. As a result, the pair of glass sheets are movable relatively to each other more flexibly.

### BRIEF DESCRIPTION OF DRAWINGS

Fig. 1 is a partially cut-away perspective view of a glass panel according to the present invention;
Fig. 2 is a perspective view of a spacer member according to the present invention;
Fig. 3 is a vertical sectional view of a principal portion about one embodiment of the glass panel according to the present invention;
Fig. 4 is a top plan view of the spacer member according to the present invention;
Fig. 5 is a sectional view from arrows taken on V-V in Fig. 4;
Fig. 6 is a sectional view from arrows taken on VI-VI in Fig. 4;
Fig. 7 is an illustrative view showing how the spacer member according to the present invention acts;
Fig. 8 is another illustrative view showing how the spacer member according to the present invention acts;
Fig. 9 shows modifications of the spacer member;
Fig. 10 is a top plan view of the spacer member according to a second embodiment;
Fig. 11 is a sectional view from arrows taken on XI-XI in Fig. 10; and
Fig. 12 is a modified embodiment of the spacer member.

### DESCRIPTION OF EMBODIMENTS

Embodiments of the present invention will be described hereinafter in reference to the accompanying drawings.

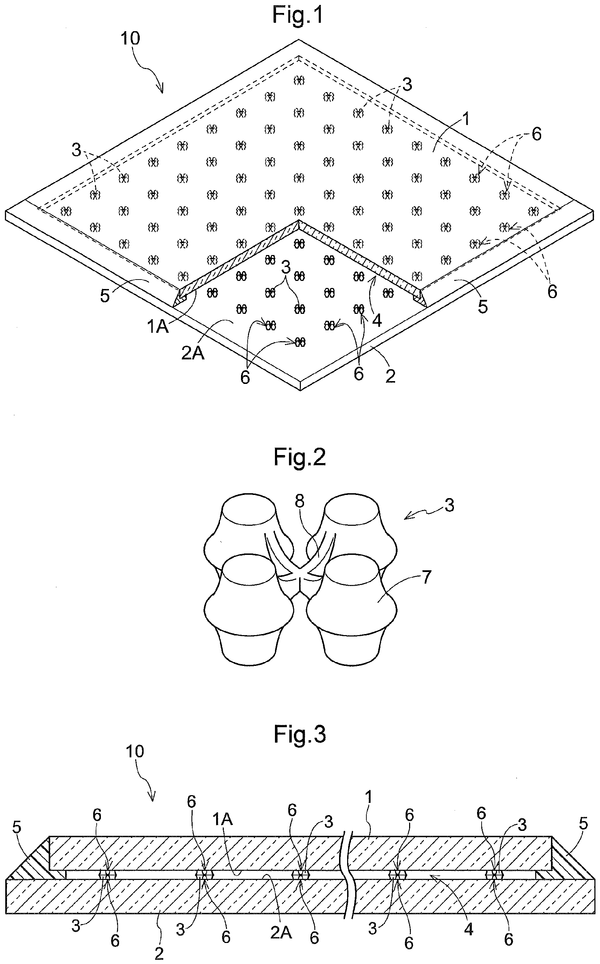

As shown in Fig. 1, a vacuum double glazing glass panel 10 (referred to as "glass panel 10" hereinafter) includes a pair of glass sheets 1 and 2, and a plurality of spacers 3 (one example of a spacer member) disposed between opposing faces 1A and 2A of the pair of glass sheets 1 and 2 to define a void 4 therebetween. A seal member 5 made of low-melting glass or metal containing lead, tin, indium or the like is fusibly provided in peripheries of the opposing faces 1A and 2A of the pair of glass sheets 1 and 2 to hermetically seal the peripheries of the glass sheets to maintain the interior of the void 4 in a depressurized state. The plurality of spacers 3 are disposed at support points 6 provided at predetermined intervals between the opposing faces 1A and 2A, respectively.

The glass panel 10 is assembled in the following manner. As shown in Fig. 1, the spacers 3 are disposed at the support points 6 provided between the opposing faces 1A and 2A of the pair of glass sheets 1 and 2, respectively, to form the void 4. The peripheries of the glass sheets 1 and 2 are sealed and combined together by means of the seal member 5 such as the low-melting glass or the metal containing lead, tin, indium or the like. Air is drawn from the void 4 through a suction hole provided in one of the pair of glass sheets 1 and 2, and then the suction hole is sealed, thereby to form the glass panel 10 (Fig. 3).

Referring to Fig. 2 as well as Figs. 4 to 6, each of the spacers 3 includes a plurality (four in the drawings) of contacting members 7, and projecting pieces 8 extending integrally from the contacting members 7 for determining postures of the contacting members 7 when the contacting members 7 are disposed between the pair of glass sheets 1 and 2. The contacting members 7 are connected to each other through the projecting pieces 8.

Each of the contacting members 7 has a substantially circular cylindrical shape with a first planar part 7A and a second planar part 7B coming into contact with the surfaces of the glass sheets 1 and 2, respectively. Each of the first planar part 7A and the second planar part 7B has a circular shape. The four contacting members 7 are connected to each other by the projecting pieces 8 forming a cross as viewed from the top.

The spacer 3 (the contacting member 7 and the projecting piece 8) is made of a material having a strength endurable against pressure applied from the surfaces of the glass sheets 1 and 2, capable of withstanding high-temperature process such as burning and baking, and hardly emitting gas after the glass panel 10 is manufactured. Such a material is preferably a hard metal material or a ceramic material, in particular, a metal material such as iron, tungsten, nickel, chrome, titanium, molybdenum, carbon steel, chrome steel, nickel steel, stainless steel, nickel-chromium steel, manganese steel, chromium-manganese steel, chromium-molybdenum steel, silicon steel, nichrome, duralumin or the like, or a ceramic material such as corundum, alumina, mullite, magnesia, yttria, aluminum nitride, silicon nitride or the like.

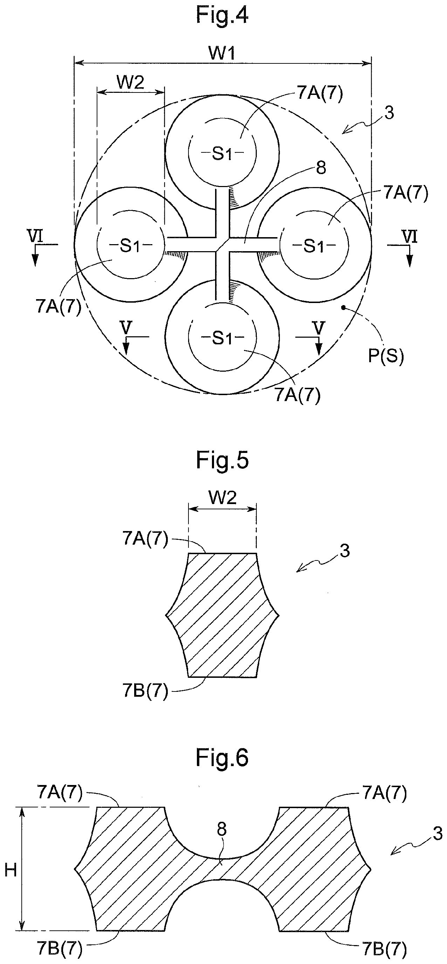

The spacer 3 can be manufactured by photoresist etching. For instance, planar photomasks shown in Fig. 4 are formed on both faces of a stainless steel plate, and each face is chemically etched. In this time, an etchant comes in from edges of the photomasks, and thus portions of the stainless steel close to the photomasks are also corroded to produce what is called "undercut" parts. While such undercut parts are also produced in areas of the photomasks in the cross portion, the stainless steel is not completely removed, thereby to form the projecting pieces 8.

In this manner, the contacting members 7 and the projecting pieces 8 are integrally formed of the same material in the spacer 3. As a result, the shape of the spacer 3 can be reliably maintained in the process of manufacturing the glass panel. Further, each projecting piece 8 has a thickness smaller than that of each contacting member 7, and thus is deformable more easily than the contacting member 7.

The spacer 3 has a maximum width dimension W1 (Fig. 4) of approximately 500µm in a plane direction of the glass sheets 1 and 2, which is substantially the same as a conventional spacer. Each of the contacting members 7 has a height dimension H (Fig. 6) of approximately 200µm, for example, which is also substantially the same as the conventional spacer.

When there is temperature difference between the glass sheet 1 and the glass sheet 2, heat transfer occurs between the glass sheet 1 and the glass sheet 2 through the spacer 3. A heat flow between the spacer 3 and the glass sheet 1 or 2 is proportional to a contacting area between the spacer 3 and the glass sheet 1 or 2. Thus, in order to reduce the heat flow, it is required to reduce the contacting area between the spacer 3 and the glass sheet 1 or 2. In the current embodiment, on the assumption that an imaginary column P that circumscribes the spacer 3 with its height direction being vertical to the glass sheet 1 is provided, the total area of areas S1 of the first planar parts 7A or the total area of areas S1 of the second planar parts 7B is equal to or smaller than one half of a circular cross section S of the column P.

Fig. 4 shows four contacting members 7 connected to each other, each contacting member having the first planar part 7A and the second planar part 7B of the same circular shape. In this case, while the circular cross section S of the column P is obtained by an expression: "S = π (W1/2)2 = πW12/4," the total area of the first planar parts 7A of the contacting member 7 is obtained by an expression: "S1 x 4 =π (W2/2)2 x 4 =πW22." In this, since the total area of the first planar parts 7A should be equal to or smaller than one half of the circular cross section S of the column P, W2 is determined at a value smaller than 1/2√2 (about one third) of W1 in order to satisfy an expression: "πW22 ≤ (πW12/4) x (1/2)."

As described above, since the total area of the areas S1 of the first planar parts 7A (or the total area of the areas S1 of the second planar parts 7B) is determined to be equal to or smaller than one half of the circular cross section S of the column P, the heat flow transferred from one of the glass sheets 1 to the other of the glass sheets 2 through the spacer 3 is reduced to achieve a vacuum double glazing glass panel having good heat-insulating properties.

Further, the spacer 3 is formed of the contacting members 7 connected to each other through the projecting pieces 8 extending integrally from the contacting members 7, in which the positional relationships between the contacting members 7 are restricted. The arrangement of the contacting members 7 connected to each other allows the spacer 3 to have a planar extent, which stabilizes the posture of the spacer 3 when disposed.

The planar parts 7A and 7B of the contacting members 7 come into contact with the glass sheets 1 and 2 and receive compressive stress applied from the glass sheets 1 and 2 based on atmospheric pressure. This alleviates the concentration of stress applied on the spacer 3, thereby to prevent damage of the glass sheets 1 and 2 and the spacer 3.

According to the current embodiment, the plurality of contacting members 7 are connected to each other by the projecting pieces 8 to provide planar spread to some extent. Therefore, the spacer 3 can maintain a stable posture per se when disposed between the surfaces of the glass sheets 1 and 2. In this, referring to Figs. 4 to 6, the maximum width dimension W2 of the first planar part 7A or the second planar part 7B of each contacting member 7 is equal to or smaller than the height dimension H of the contacting member 7, i.e., the dimension defined between the first planar part 7A and the second planar part 7B.

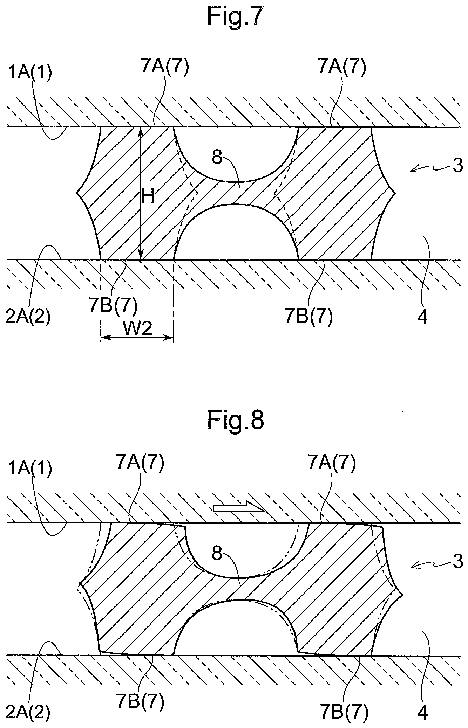

Fig. 7 shows that the spacer 3 is disposed between the glass sheets 1 and 2, in which the maximum width dimension W2 is equal to or smaller than the height dimension H in the contacting member 7. When the glass panel 10 is bent and deformed by wind pressure or the like to cause the pair of glass sheets 1 and 2 to relatively move to each other in the plane direction, the contacting member 7 is easily inclined and deformed along the moving direction or easily changed to assume a rolling posture (see Fig. 8). More particularly, the contacting member 7 easily causes the pair of glass sheets 1 and 2 to move relatively to each other in a plane direction of the glass sheets. As a result, when the glass panel 10 is bent and deformed, it is prevented that the spacer 3 is disadvantageously displaced or that the spacer 3 or the glass sheet 1 or 2 is adversely damaged. The projecting pieces 8 are positioned remote from the pair of glass sheets 1 and 2.

Referring to Fig. 2, each projecting piece 8 has a rod-like shape, for example, having a thickness and a width smaller than those of contacting member 7. Therefore, the projecting piece 8 is deformed more easily than the contacting member 7 and does not interfere with the deformation or the change in posture of the contacting member 7.

As illustrated in Fig. 2 or 4, the first planar part 7A and the second planar part 7B each have a circular shape. Therefore, when the pair of glass sheets 1 and 2 are displaced relatively to each other along the plane direction, the properties of the contacting member 7 are not changed depending on the rolling direction when the contacting member 7 changes its posture to roll on the glass sheets 1 and 2. As a result, the spacer 3 is easily inclined and deformed or easily changed to assume the rolling posture regardless of the direction of relative movement between the glass sheets 1 and 2. In this manner, according to the current embodiment, the spacers 3 can be easily disposed regardless of in which direction the spacers 3 are arranged, and further the relative movement between the glass sheets 1 and 2 is allowed in any direction regardless of in which direction the spacers 3 are arranged.

### [Modifications of Spacer According to First Embodiment]

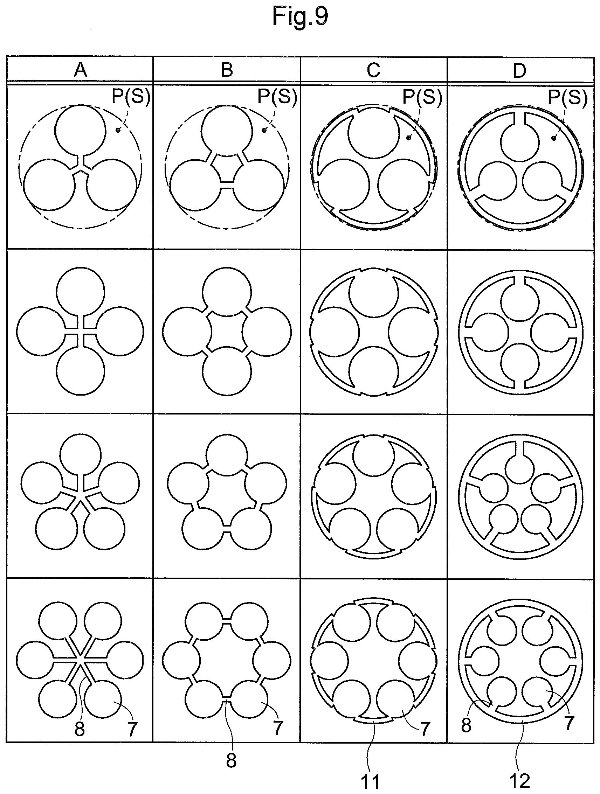

Modifications of the spacer 3 according to the first embodiment will be described hereinafter in reference to Fig. 9.

Fig. 9 shows four types of spacer 3, i.e., Type A to Type D.

Type A has a plurality of contacting members 7 connected to each other through projecting pieces 8 extending integrally from the contacting members 7, respectively, while the projecting pieces 8 being converged at a central portion of the spacer 3.

Type B has a plurality of contacting members 7 connected to each other in an annular shape, in which the contacting members 7 that are circumferentially adjacent to each other are connected to each other by a projecting piece 8.

Type C has a combination of the projecting pieces 8 extending integrally from the contacting members 7, which forms a ring-like connection part 11, in which the plurality of contacting members are accommodated.

Type D has a plurality of projecting pieces 8 extending inward from a ring-like connection part 12, in which contacting members 7 are provided in the projecting pieces 8, respectively. The ring-like connection part 12 may have a polygonal shape, instead of the annular shape.

In Fig. 9, the number of contacting members 7 in the spacer 3 is three to six. Instead, the number of contacting members 7 may be two, or seven or more if a plurality of contacting members 7 are provided. It should be noted that the contacting members 7 are disposed equidistantly in the circumferential direction in each of Type A to Type D to eliminate the anisotropy of the spacer 3 as much as possible.

When the ring-like connection part 11 or 12 is provided for accommodating the plurality of contacting members 7 as in Type C and Type D, it is prevented that the contacting members 7 are disadvantageously entangled with each other when the plurality of spacers 3 are disposed in the surfaces of the glass sheets 1 and 2. As a result, an efficiency of disposing the spacers 3 is improved.

In order to maintain a reduced heat flow of the spacer 3, it is preferable that a contacting area between the spacer 3 and the glass sheet 1 or 2 is small. In determining the contacting area, however, it is required to take into account the compressive strength of the material forming the spacer 3.

When the spacers 3 are arranged in squares between the glass sheets, in which each spacer 3 has a contacting region A and a distance λ to an adjacent spacer 3, compressive stress σ applied to each spacer 3 is represented by an expression: σ = qλ2/A, in which "q" represents atmospheric pressure (105Nm-2).

For instance, when the spacer 3 is formed of only cylindrical contacting members 7, in which a radius "a" of the contacting region A is 0.25 mm, the distance λ between adjacent spacers 3 is 20mm, the contacting region A is obtained by an expression: A = πa2 = 2.0 x 10-7m2, and a force applied to each spacer 3 is 40N. Thus, each spacer 3 receives compressive stress of approximately 200 Mpa (σ = 40/(2.0 x 10-7).

Hence, if the compressive strength of the material forming the spacer 3 is lower than the compressive stress applied to the spacer 3 (200 Mpa in the above example), the spacer 3 might be broken. Therefore, it is required that the contacting region A (the sum of the contacting areas) between the spacer 3 and the glass sheet be determined within a range in which the compressive stress applied to the spacer 3 is lower than the compressive strength of the material forming the spacer 3.

In order for the contacting members 7 to roll over (incline) with reduced plastic deformation when the glass sheets 1 and 2 are displaced in the plane direction, the maximum width dimension W2 of each contacting member 7 is preferably small. Assuming that the sum of the contacting areas of the spacer 3 is determined at a minimum value to the extent that the spacer 3 is not broken, the more the number of the contacting members 7 is increased, the smaller the maximum width dimension W2 of each contacting member 7 becomes. Thus, it is more preferable that the number of the contacting members 7 is increased in order to improve shock resistance of the glass panel.

On the other hand, assuming that the sum of the contacting areas of the spacer 3 is determined at a minimum value to the extent that the spacer 3 is not broken, a distance between adjacent contacting members 7 is reduced by increasing the number of contacting members 7. This causes a heat flow in a region between the adjacent contacting members 7 as well, which easily increase a heat flow region in the spacer 3. Therefore, it is more preferable that the number of contacting members 7 is reduced in order to avoid expansion of the heat flow region in the spacer 3.

### [Second Embodiment]

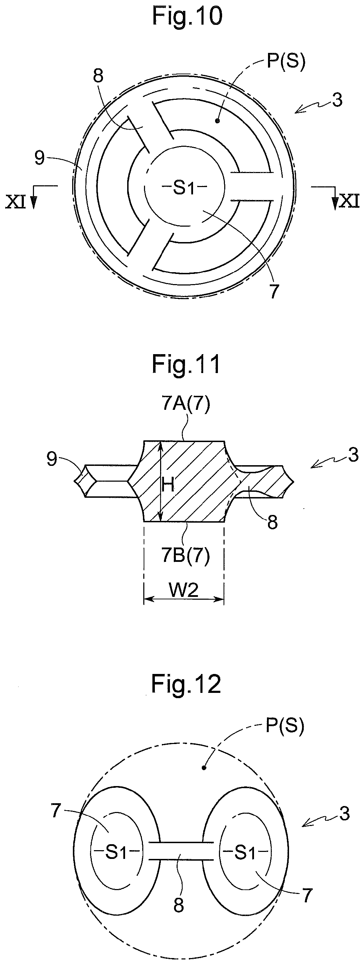

Referring to Figs. 10 and 11, a spacer 3 has one contacting member 7. A ring part 9 is provided to surround the contacting member 7, and is supported by projecting pieces 8 extending integrally from the contacting member 7.

According to the second embodiment, on the assumption that an imaginary column P that circumscribes the spacer 3 is provided, an area S1 of a first planar part 7A (an area S1 of a second planar part 7B) is equal to or smaller than one quarter of a circular cross section S of the column P along the planar direction of the glass sheet 1.

In the arrangement shown in Fig. 10, a maximum width dimension W2 of the first planar part 7A is equal to or smaller than one half of a maximum width dimension W1 of the spacer 3. As a result, the area S1 of the first planar part 7A is equal to or smaller than one quarter of a cross section S of the first planar part 7A.

In the contacting member 7, a maximum width dimension W2 of the first planar part 7A or the second planar part 7B is equal to or smaller than a height dimension H (a dimension between the first planar part 7A and the second planar part 7B). Therefore, when the pair of glass sheets 1 and 2 are moved relatively to each other, the contacting member 7 is inclined or deformed along a direction of an opposing face 1A (or 2A), or assumes a rolling posture to follow the relative movement between the glass sheets 1 and 2.

It is regarded that a single contacting member 7 has a height dimension H that is equal to or greater than the maximum width dimension W2, and thus easily rolls on the glass sheets 1 and 2 when disposed on the glass sheets. In view of this, the ring part 9 is provided in the outer periphery of the contacting member 7 to come into contact with the surfaces of the glass sheets 1 and 2 and properly determine the posture of the contacting member 7, even if the contacting member 7 changes its posture to roll over. As a result, the first planar part 7A and the second planar part 7B of the contacting member 7 reliably come into contact with the opposing faces of the pair of glass sheets 1 and 2 when the spacer 3 is disposed between the surfaces of the glass sheets 1 and 2, thereby to improve an efficiency of disposing the spacer 3.

The ring part 9 is supported by the projecting pieces 8 extending integrally from the contacting member 7, in which each of the projecting pieces 8 is a small element projecting from a specific part of the contacting member 7. Thus, a weight ratio of the projecting pieces 8 to the whole spacer 3 is not so high. According to the second embodiment, while the spacer 3 supports the ring part 9, a large part of weight distribution of the spacer 3 remains around the contacting member 7 located in the center, which effectively prevents the contacting member 7 from changing its posture to roll over when the spacer 3 is disposed between the surfaces of the glass sheets 1 and 2.

### [Other Embodiments]

[1] The first planar part 7A and the second planar part 7B may be elliptic as shown in Fig. 12. In this case, each contacting member 7 is easily deformable or easily rolls in a lateral direction in paper. In the current example, however, two contacting members 7 are arranged with a large gap therebetween in the lateral direction to allow the spacer 3 to have a laterally elongated shape, thereby to achieve the spacer 3 having no anisotropy in deformation properties.
[2] The contacting member 7 may have a rectangular cylindrical shape, instead of a circular cylindrical shape.
[3] The spacer 3 may be manufactured to have a predetermined dimension by laser cutting or punching press, instead of etching processing.

### REFERENCE SIGNS LIST

1, 2 glass sheet 1A, 2A
opposing face 3
spacer (spacer member) 4
void 6
support point 7
contacting member 7A
first planar part 7B
second planar part 8
projecting piece 9
ring part 11
connection part 12
connection part H
height dimension (dimension between first planar part and second planar part)
P imaginary column
S area
S1 area of first planar part
W2 maximum width dimension

## Claims

1. A spacer member for a vacuum double glazing glass panel, the spacer member being disposed at each of support points set at predetermined intervals on opposing faces of a pair of glass sheets opposing to each other when a gap formed between the pair of glass sheets is maintained under a depressurized state,
wherein the spacer member includes: at least one contacting member having a first planar part on one side and a second planar part on the other side coming into contact with the respective opposing faces of the glass sheets and a projecting piece extending integrally from the contacting member, and
on the assumption that an imaginary column that circumscribes the spacer member with its height direction being vertical to the first planar part is provided, the total area of the first planar part or the total area of the second planar part is equal to or smaller than one half of a circular cross section of the column.

2. The spacer member according to claim 1, wherein the total area of the first planar part or the total area of the second planar part is equal to or smaller than one quarter of the circular cross section of the column.

3. The spacer member according to claim 1 or 2, wherein the spacer member has one contacting member and a ring part which is supported by the projecting piece and surrounding the contacting member.

4. The spacer member according to claim 1 or 2, wherein the spacer member has a plurality of contacting members connected one another via the projecting piece.

5. The spacer member according to claim 4, wherein a combination of the projecting pieces forms a ring-like connection part in which the plurality of contacting members are accommodated.

6. The spacer member according to claim 5, wherein the ring-like connection part is in an annular shape.

7. The spacer member according to any one of claims 1 to 6, wherein at least one of the first planar part and the second planar part is formed of a circular shape.

8. The spacer member according to any one of claims 1 to 7, wherein the projecting piece does not touch the glass sheets with the contacting member being provided between the pair of glass sheets.

9. The spacer member according to any one of claims 1 to 8, wherein the maximum width dimension of the first planar part or the second planar part is equal to or smaller than a height dimension between the first planar part and the second planar part.
